# EUROPEAN PATENT APPLICATION

(11) **EP 4 292 862 A1**
(43) Date of publication of application: **20.12.2023**
(21) Application number: 22179084.3
(22) Date of filing: 15.06.2022
(51) Int. Cl.: B60L 50/40, B60K 6/00, B60L 50/70

(54) **POWER DISTRIBUTION SYSTEM AND METHOD FOR DISTRIBUTING POWER IN A FUEL CELL VEHICLE**

(71) Applicant: AVL Powertrain UK Ltd, Basildon SS15 6LN (GB)
(72) Inventor: Ghosh, Saikat, Basildon (GB); Fliscu, Catalin, Coventry (GB)
(74) Representative: Gamper, Bettina

(57) **Abstract**

The present invention relates to a power distribution system for a fuel cell and a corresponding method for distributing power in a fuel cell vehicle. The power distribution system comprises a fuel cell unit (1) for generating electric power, a DC/DC boost converter (2), a high voltage supply line (3) for supplying traction power, an electric drive unit (4) for propelling the fuel cell vehicle, and an ultra-capacitor unit (5) for supporting instant power supply on load demand. According to the invention, the ultra-capacitor unit (5) is directly connected to the high voltage supply line (3); and the ultra-capacitor unit (5) comprises a capacity dimensioned to provide up to all traction power on load demand of the electric drive unit (4) under a lack or delay of power generation of the fuel cell unit, at least for a predetermined time period. The power distribution system and method according to the invention eliminates provision of commonly used high voltage batteries in a drive train of a fuel cell vehicle.

## Description

The present invention relates to a power distribution system for a fuel cell and a corresponding method for distributing power in a fuel cell vehicle.

### Technical field of the invention

The use of hydrogen as a solution for renewable energy storage has attracted enormous attention in striving for decarbonization and global climate goals. High efforts of engineering have since been invested in developing fuel cell power systems for mobile applications appearing as a key technology for the transportation sector while promising long range energy storage and zero emissions power generation.

As is well known, an onboard power system of a fuel cell electric vehicle (FCEV) is more complex in comparison to a battery electric vehicle (BEV) in terms of the number of components required for storage and delivery of electric power to the electric motor. This becomes apparent for a number of components (gas supply, fuel cell stack, voltage converter) up to the stage of a high voltage battery for buffering a lag of generated power in transient load or driving states, since the rest of components downstream in the drive train of a FCEV is similar to the drive train of a BEV which starts directly from the component of the high voltage battery itself.

### Background of the invention

However, as a downside to the BEV, its high voltage battery is required to provide substantially huge capacity of energy introducing heavy weight and high material costs for compensating the long range capability of onboard power generation of a FCEV.

Due to the fact that high pressure hydrogen gas tanks of FCEV are capable of storing chemical energy at a higher mass related energy density compared to the electrochemical energy storage in present commercially viable Lithium Ion Batteries (LIB), it would be desirable to eliminate in FCEVs the remaining heavy weight and high material costs of high voltage batteries commonly used in the drive train for buffering purpose.

### Summary of the Invention

It is an object of the invention to provide a technique for eliminating high voltage batteries in the drive train of a fuel cell vehicle. It is further an object of the invention to provide a technique for a stable and safe power distribution in different operation modes ranging from driving to standstill and vice versa.

The foregoing technical task is solved by the power distribution system for a fuel cell vehicle having the features of claim 1, as well as a corresponding method for distributing power in a fuel cell vehicle including the steps of claim 9. Further features and details of the invention result from the subclaims, the description and the drawings.

According to the invention, the power distribution system for a fuel cell vehicle comprises: a fuel cell unit for generating electric power, wherein the fuel cell unit is fed by a fuel gas supply and an oxidation gas supply; a DC/DC boost converter for boosting an output voltage of the fuel cell unit to a supply voltage of a high voltage supply line for supplying traction power; an electric drive unit for propelling the fuel cell vehicle, wherein the electric drive unit is directly connected to the high voltage supply line for receiving traction power therefrom; and an ultra-capacitor unit for supporting instant power supply on load demand.

Particularly, in the power distribution system according to the invention, the ultra-capacitor unit is directly connected to the high voltage supply line; and the ultra-capacitor unit comprises a capacity dimensioned to provide up to all traction power on load demand of the electric drive unit under a lack or delay of power generation of the fuel cell unit, at least for a predetermined time period.

Likewise, according to the invention, the method for distributing power in a fuel cell vehicle comprises the steps of: generating power by a fuel cell unit; boosting output power of the fuel cell unit by a DC/DC boost converter; supplying traction power on load demand of an electric drive unit by a high voltage supply line; and supporting instant supply of traction power under transient load by an ultra-capacitor unit directly connected to the high voltage supply line. Particularly, the method has the step of providing up to all traction power on demand of the electric drive unit solely by the ultra-capacitor unit under a lack or delay of power generation of the fuel cell unit, at least for a predetermined time period.

The invention thus provides, for the first time, a solution to completely replace high voltage batteries by means of ultra-capacitors, meaning that the ultra-capacitors burst the full high voltage power supply on a power train of a fuel cell vehicle which is free of high voltage batteries, wherein the ultra-capacitors are directly connected to the power train without any need for intermediate voltage conversion.

As a definition in terms of the present disclosure of the invention, an ultra-capacitor or super-capacitor denotes a type of capacitor having a larger energy density than most static capacitors based on an electric field. Ultra-capacitors comprise an electrolyte based electrode structure allowing formations of pseudo charges and/or double layer charges on electrode surfaces, i.e. without any intercalation of ions into host electrode material as is the case with batteries like LIBs. The term ultra-capacitor unit denotes an arrangement of a plurality of ultra-capacitor units, also called as a capacitor bank which forms a buffer storage for high voltage energy and high power density as required for traction applications in an electrically propelling drive train.

In this context, as a further definition in terms of the present disclosure of the invention, the terms of providing up to all traction power on load demand of the electric drive unit relates to a variable power requirement as demanded by an electric motor depending on a current manipulation magnitude of an accelerator pedal, a current driving load on the drive train and other conditions of a current driving situation. The terms of up to all traction power on load demand enclose states of partial power supplies provided by the fuel cell and the ultra-capacitor unit together in a variable ratio, but also a state of providing and effectively covering the load demand at full load operation of the driving unit by the ultra-capacitor unit only. Hence, in terms of the invention, the ultra-capacitor unit is not only configured to buffer a difference of energy and support supply voltage in transient stated between an instant power request on the propelling side and a time lag of power generation on the energy source side. In terms of the invention, the ultra-capacitor unit has dimensions of capacity with respect to a power rate (C-rate) and captured energy also which meet a maximum power of the drive unit for a predetermined time period, e.g. a maximum required time period corresponding to the case of a restart of the power generation of the fuel cell unit, i.e. for several seconds or up to a minute.

The invention is based on the findings that a capacitor-based buffer has a lower mass-related energy density, but a higher mass-related power density, and a better cycle stability compared to the battery-based buffers used in the drive train of fuel cell vehicles. Hence, a capacitor bank or pack having a sufficient capacity and voltage for replacing, without a voltage converter, a high voltage battery in a drive train, provides for a superior high power response at an extended life span. The combination of high energy density of the chemical energy stored in hydrogen tanks and the high power density of capacitors achieves a long range capability and stable instant power supply on sudden load demands compensating a power generation control of the fuel cell following with delay.

Despite a higher energy and power density, the combination of fuel cell power generation and capacitor-based energy buffering has a smaller overall system weight, a higher cycle stability or life span and potentially lower material costs than a BEV or a systems using high voltage batteries for power buffering purpose.

According to an advantageous aspect of the invention, the power distribution system comprises a low voltage battery for providing power supply at least during stopped driving state of the fuel cell vehicle, wherein the low voltage battery is indirectly connected to the high voltage supply line via a bidirectional DC/DC converter for converting voltage between an output or input voltage of the low voltage battery and the supply voltage of the high voltage supply line. The low voltage battery comprises a capacity dimensioned to store all energy from the ultra-capacitor unit required to reach a voltage decrease to at least a predetermined low voltage level of an output voltage of the ultra-capacitor unit and/or of the supply voltage of the high voltage supply line.

Correspondingly, an advantageous method step of the invention performs a discharging of the ultra-capacitor unit based on transferring energy to a low voltage battery indirectly connected to the high voltage supply line by a bidirectional DC/DC converter. Preferably, the step of discharging the ultra-capacitor unit is triggered in relation to a shut-down of the fuel cell vehicle. In a preferred manner, the step of discharging draws energy from the ultra-capacitor unit so as to reach at least a predetermined low voltage level of an output voltage of the ultra-capacitor unit and/or the supply voltage of the high voltage supply line.

By discharging the ultra-capacitor unit before a standstill of the vehicle, the power distribution system and method assure a high safety against the hazard of sudden high voltage discharge events of energy stored in the ultra-capacitors. Hence, the capability and functionality of the power distribution system to actively discharge energy from the ultra-capacitor unit before standstill, and to store the discharged energy on a safe low voltage level of the low voltage battery, prevents potential harm of electric shocks for e.g. mechanics or any other person by flash-like sparks or laser discharges of high voltage energy, if getting in contact with the capacitors or high voltage supply line during maintenance or repair tasks.

This particular advantage of the capacitor-based buffer storage for FCEVs cannot be realized with a common type of battery-based buffer storage, due to avoidance of deteriorating deep discharges of a high voltage battery, and due to slower active discharge (C-rate) properties of batteries when shifting into such standstill operation mode.

On the other hand, capacitors tend to self-discharge faster than batteries, similar to a creepage current during stand still, and keeping such remaining energy is valuable in mobile applications during absence of power generation and, more particular, for restarting the system upon long-term standstill. Thus, the capability and functionality of the power distribution system to actively discharge energy from the ultra-capacitor unit before standstill, and to store the discharged energy in the low voltage battery, preserves the remaining energy of the system more sustainable, and significantly improves start-up capability of the system upon a long-term standstill.

According to an advantageous aspect of the invention, the low voltage battery comprises a capacity dimensioned to cover all energy required to charge the ultra-capacitor unit so as to reach at least a predetermined high level of the output voltage of the ultra-capacitor unit and/or the supply voltage of the high voltage supply line.

Correspondingly, an advantageous method step of the invention performs a charging of the ultra-capacitor unit based on transferring energy from the low voltage battery indirectly connected to the high voltage supply line by the bidirectional DC/DC converter. Preferably, the step of charging the ultra-capacitor unit is triggered in relation to a start-up of the fuel cell vehicle. In a preferred manner the step of charging delivers energy to the ultra-capacitor unit so as to reach at least a predetermined high voltage level of the output voltage of the ultra-capacitor unit and/or the supply voltage of the high voltage supply line.

By charging energy from the low voltage battery to the ultra-capacitor unit during start-up phase, the power distribution system supports a higher voltage level of supply voltage in the high voltage supply line compared to the voltage level of the low voltage battery. The ramped-up voltage is advantageous for the operation of auxiliary devices of the fuel cell unit like a blower or compressor for oxidation gas supply to commence with the electrochemical power generation process in the fuel cell. At a preferred capacity dimension of the low voltage battery, the energy transferable during start-up is sufficient to fully charge the ultra-capacitor unit and enabling to cover up to all traction power on demand of the electric drive unit solely by the ultra-capacitor unit before the power generation has ramped-up to full extend upon restart of the fuel cell unit.

According to an advantageous aspect of the invention, the predetermined low voltage level corresponds to an output voltage of the low voltage battery, or an operational lower limit voltage of the bidirectional DC/DC converter, and wherein the predetermined high voltage level corresponds to an input voltage of the electric drive unit, or an input voltage of at least one of auxiliary devices of the fuel cell vehicle. With these predefined matching voltage levels, the power distribution system enables the advantages of keeping a safe and sustainable energy preservation during standstill, but also maintaining a fast recovery of driving capability at a restart of the FCEV.

According to an advantageous aspect of the invention, the power distribution system further comprises auxiliary devices connected to the high voltage supply line, including: BoP auxiliary of the fuel cell unit serving for balancing of power of same, wherein the BoP auxiliary preferably comprises an air blower or air compressor, a gas supply valve, and/or a coolant pump; and/ or onboard auxiliary of the fuel cell vehicle serving for operating ability, emergency or comfort of same, wherein the onboard auxiliary preferably comprises sensors, lighting, air conditioning, and/or entertainment equipment.

In an advantageous embodiment, the capacity of the low voltage battery comprises a capacity dimensioned to additionally cover all auxiliary power on demand of the auxiliary devices at least for a predetermined time period of a stopped driving state. At a preferred capacity dimension of the low voltage battery, the energy available during of a stopping state or standstill of the FCEV is sufficient to maintain all or a part of entertainment and comfort functions of the onboard auxiliary, at least for a predetermined time period. Such time period might be determined up to a requirement for locking a remaining energy in the low voltage battery to be preserved for charging the capacitor during start-up and recovering or maintaining operability of the BoP auxiliary for power generation in the fuel cell unit.

According to an advantageous aspect of the invention, the fuel cell vehicle further comprises a control unit for controlling power electronics and power circuits, wherein the control unit being configured to discharge the ultra-capacitor unit based on transferring energy to the low voltage battery by controlling the bidirectional DC/DC converter, in relation to a shut-down of the fuel cell vehicle. Based on a control of a variable conversion in voltage difference and power rate, the power electronics of the bidirectional DC/DC converter enables to precisely draw and pump energy from high voltage supply line and thus from the ultra-capacitor unit to the low voltage battery.

According to a complementary advantageous aspect of the invention, the control unit is configured to charge the ultra-capacitor unit based on transferring energy from the low voltage battery by controlling the bidirectional DC/DC converter, in relation to a start-up of the fuel cell vehicle. Based on the control of the variable conversion in voltage difference and power rate, the power electronics of the bidirectional DC/DC converter enables to precisely draw and pump energy from the low voltage battery to the high voltage supply line and thus to the ultra-capacitor unit.

Further objectives, advantages, features and applications of the present invention arise from the following description of the exemplary embodiments with reference to the drawings. In the drawing:

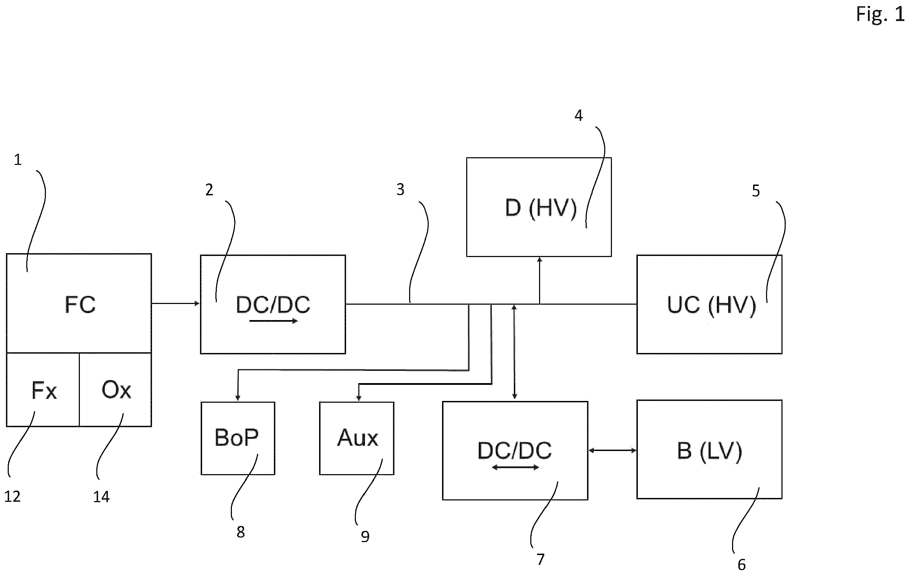

- Fig. 1: is a schematic block diagram of the power distribution system according to the invention and being relevant for implementation of the method for distributing power according to the invention, within an environment of an onboard system of a fuel cell vehicle.

### Detailed description of embodiments of the invention

Figure 1 shows a section of a fuel cell system relevant to for distributing power in a fuel cell vehicle, illustrated schematically as a block diagram. The power distribution system includes a fuel cell unit 1 having fuel cell stacks, each of which has an anode section and a cathode section (not depicted). The anode section of each fuel cell stack is connected to an anode supply section 12 for supplying a fuel gas (Fx), in particular hydrogen, in a known manner. The cathode section of each fuel cell stack is connected to a cathode supply section 14 for supplying an oxidation gas (Ox), in particular oxygen-containing air. In addition, the respective cathode section is connected to a cathode exhaust section for exhausting cathode exhaust gas, and the respective anode section is connected to a cathode exhaust section for exhausting cathode exhaust gas (not depicted).

A DC-DC boost converter 2 is provided between the fuel cell unit 1 and a high voltage supply line 3. The DC-DC boost converter 2 serves as a voltage booster that boosts a load-dependent varying output voltage of the fuel cell unit 1 to a supply voltage. For this purpose, the DC-DC boost converter 2 has a low-voltage side at which the generated power is supplied from the fuel cell unit 1, and a high-voltage side which passes the power at an increased supply voltage to the high-voltage supply line 3. Further, the DC-DC boost converter 2 comprises power electronic circuit that serves for smoothing voltage and current peaks between the low-voltage side and the high-voltage side that may occur, for example, during switching operations in electrical connections of the fuel cell system. In the present embodiment, the fuel cell unit 1 and the DC-DC boost converter 2 are designed for a power generation in transportation application operating under dynamic load changes with a supply voltage in a high voltage range of e.g. 400 V or 800 V.

The high voltage supply line 3 of the power distribution system supplies high voltage DC power at said supply voltage to loads connected to a drive train, in particular to an electric drive unit 4 requesting traction power for propelling the fuel cell vehicle and other auxiliary devices 8, 9.

The electric drive unit 4 includes at least one traction motor or one traction motor per axle of the vehicle and an inverter device (not depicted) for converting the DC current power into a three-phase or multi-phase current for energizing rotary electromagnetic fields under control of power electronics.

The auxiliary devices include components for the balance of power or BOP auxiliary 8 required for the functionality of the fuel cell unit 1, in particular an air blower or air compressor for conveying oxidation gas, a gas supply valve for controlling delivery of pressurized fuel gas, and a coolant pump for circulating a coolant in the fuel cell stacks. The auxiliary devices also include components of onboard auxiliary 9 for safety or comfort, such as sensors e.g. for airbag ignition, outer and inner vehicle lighting, air conditioning of the vehicle compartment, and entertainment or navigation equipment, as a few examples. The auxiliary devices 8, 9 are either directly connected to the high voltage supply line 3 and having resistors for setting an appropriate lower input voltage, or indirectly connected by a power management device (not depicted). Foremost in terms of power for the electric drive unit 4, the high voltage supply line 3 is directly connected to an ultra-capacitor unit 5.

The ultra-capacitor unit 5 stores energy for buffering deviations between consumption and generation of power in the power distribution system. Also the ultra-capacitor unit 5 uptakes and delivers energy at a high power rate to effectively stabilize a voltage level of the supply voltage of the high voltage supply line 3 in case of instant demand of full traction power of the drive unit 4. In this way, the ultra-capacitor unit 5 balances fluctuations due to dynamic load changes in the drive train and a following power generation of the fuel cell unit 1. The ultra-capacitor unit 5 comprises a capacitor bank of several parallel or serial connected capacitor units for forming a power rate and capacity of energy which meets a maximum power of the electrical drive unit 4 for a predetermined time period, e.g. a maximum time period corresponding to the case of a restart of the power generation of the fuel cell unit, i.e. for several seconds or up to a minute. In this configuration, the ultra-capacitor unit 5 equally replaces a commonly used high voltage battery for buffering traction power in the drive train.

Furthermore, the power distribution system includes a low voltage battery 6 for preservation of energy during a standstill or directly or indirectly supporting auxiliary devices 8, 9 during stopping of the vehicle, in case of a lack of energy, or any other passive states of power generation. The capacity dimension of the low voltage battery 6 is set substantially at least equal to the capacity of the ultra-capacitor unit 5. Said capacity dimensions enable to alternatingly swing a certain content of energy by charging and discharging actions between both storage sides of the ultra-capacitor unit 5 and the low voltage battery 6 during shut-down and start-up phases of the fuel cell vehicle.

The low voltage battery 6 is indirectly connected to the high voltage supply line 3 via a bidirectional DC/DC converter 7. The bidirectional DC/DC converter 7 serves for voltage conversion between a high voltage side connected to the high voltage supply line 3 and a low voltage side connected to the low voltage battery 6. The bidirectional DC/DC converter 7 comprises a power electronic circuit capable of drawing and pumping controlled amounts of energy in both directions between high voltage side and low voltage side.

In particular, in case of a shut-down procedure of the fuel cell vehicle recognized by a control unit (not depicted), a controlled draw of energy from the high voltage side and pump of said energy to the low voltage side through the bidirectional DC/DC converter 7 realizes a discharging action of the ultra-capacity unit 5 and charging action of the low voltage battery 6. Vice versa, in case of a start-up procedure of the fuel cell vehicle recognized by the control unit, a controlled draw of energy from the low voltage side and pump of said energy to the high voltage side through the bidirectional DC/DC converter 7 realizes a discharging action of the low voltage battery 6 and charging action of the ultra-capacity unit 5.

When discharging the ultra-capacitor 5 during a stop of power generation of the fuel cell unit 1 while entering a standstill operation mode, the supply power of high voltage supply line 3 decreases. If all energy captured in the ultra-capacitor 5 is consumed by the loads 5, 8, 9 or discharged and transferred to the low voltage battery 6, the supply power of high voltage supply line 3 is decreased to a minimum operational voltage of the low voltage side of the bidirectional DC/DC converter 7 which is a low, non-harmful to human voltage level near the output voltage of the low voltage battery, e.g. below 24 V.

When charging the ultra-capacitor 5 for a restart of the vehicle, the supply voltage of high voltage supply line 3 increases up to a high voltage level of e.g. 400 V or 800 V for enabling at least the BoP auxiliary to commence electrochemical reaction for power generation in the fuel cell unit 1, in particular a blower or compressor. In another configuration the supply voltage of high voltage supply line 3 is increased and supported by the ultra-capacitor 5 so as to enable an instant driving mode of the fuel cell vehicle for already powering the electrical driving unit 4 before power generation of the fuel cell unit 1 is ramped-up to an appropriate or full load operation.

The foregoing explanations of the embodiments describe the present invention exclusively in the context of examples. Of course, individual features of the embodiments of the power distribution system and the individual steps of the method for distributing power may be freely combined with one another, provided that this is technically expedient, without departing from the scope of the present invention.

### List of reference signs

- 1: Fuel cell unit
- 2: DC/DC boost converter
- 3: High voltage supply line
- 4: Electrical drive unit
- 5: Ultra-capacitor unit
- 6: Low voltage battery
- 7: bidirectional DC/DC converter
- 8: BoP (balancing of power) auxiliary
- 9: onboard auxiliary
- 12: Anode feed section
- 14: Cathode feed section

## Claims

1. A power distribution system for a fuel cell vehicle comprising:
a fuel cell unit (1) for generating electric power, wherein the fuel cell unit (1) is fed by a fuel gas supply (12) and an oxidation gas supply (14);
a DC/DC boost converter (2) for boosting an output voltage of the fuel cell unit (1) to a supply voltage of a high voltage supply line (3) for supplying traction power;
an electric drive unit (4) for propelling the fuel cell vehicle, wherein the electric drive unit (4) is directly connected to the high voltage supply line (3) for receiving traction power therefrom; and
an ultra-capacitor unit (5) for supporting instant power supply on load demand;
**characterized in that**,
the ultra-capacitor unit (5) is directly connected to the high voltage supply line (3); and
the ultra-capacitor unit (5) comprises a capacity dimensioned to provide up to all traction power on load demand of the electric drive unit (4) under a lack or delay of power generation of the fuel cell unit, at least for a predetermined time period.

2. The power distribution system according to claim 1, further comprising:
a low voltage battery (6) for providing power supply at least during stopped driving state of the fuel cell vehicle, wherein the low voltage battery (6) is indirectly connected to the high voltage supply line (3) via a bidirectional DC/DC converter (7) for converting between an output or input voltage of the low voltage battery (6) and the supply voltage of the high voltage supply line (3); wherein
the low voltage battery (6) comprises a capacity dimensioned to store all energy from the ultra-capacitor unit (5) required to reach a voltage decrease to at least a predetermined low voltage level of an output voltage of the ultra-capacitor unit (5) and/or of the supply voltage of the high voltage supply line (3).

3. The power distribution system according to claim 2, wherein
the low voltage battery (6) comprises a capacity dimensioned to cover all energy required to charge the ultra-capacitor unit (5) so as to reach at least a predetermined high voltage level of the output voltage of the ultra-capacitor unit (5) and/or the supply voltage of the high voltage supply line (3).

4. The power distribution system according to claim 2 or 3, wherein
the predetermined low voltage level corresponds to an output voltage of the low voltage battery (6), or an operational lower limit voltage of the bidirectional DC/DC converter (7), and wherein the predetermined high voltage level corresponds to an input voltage of the electric drive unit (4), or an input voltage of at least one of auxiliary devices (8, 9) of the fuel cell vehicle.

5. The power distribution system according to any of the preceding claims, further comprising auxiliary devices (8, 9) connected to the high voltage supply line (3), including:
BoP auxiliary (8) of the fuel cell unit (1) serving for balancing of power of same, wherein the BoP auxiliary (8) preferably comprises an air blower or air compressor, a gas supply valve, and/or a coolant pump; and/ or
onboard auxiliary (9) of the fuel cell vehicle serving for operating ability, emergency or comfort of same, wherein the onboard auxiliary (9) preferably comprises sensors, lighting, air conditioning, and/or entertainment equipment.

6. The power distribution system according to claim 5, wherein
the low voltage battery (6) comprises a capacity dimensioned to additionally cover all auxiliary power on demand of the auxiliary devices (8, 9) at least for a predetermined time period of a stopped driving state.

7. The power distribution system according to any of the preceding claims, wherein
the fuel cell vehicle further comprises a control unit for controlling power electronics and power circuits, wherein
the control unit is configured to discharge the ultra-capacitor unit (5) based on transferring energy to the low voltage battery (6) by controlling the bidirectional DC/DC converter (7), in relation to a shut-down of the fuel cell vehicle.

8. The power distribution system according to claim 7, wherein
the control unit is configured to charge the ultra-capacitor unit (5) based on transferring energy from the low voltage battery (6) by controlling the bidirectional DC/DC converter (7), in relation to a start-up of the fuel cell vehicle.

9. A method for distributing power in a fuel cell vehicle, the method comprising the steps of:
generating power by a fuel cell unit;
boosting output power of the fuel cell unit (1) by a DC/DC boost converter (2);
supplying traction power on load demand of an electric drive unit (4) by a high voltage supply line (3);
supporting instant supply of traction power under transient load by an ultra-capacitor unit (5) directly connected to the high voltage supply line (3);
**characterized by** the step of:
providing up to all traction power on demand of the electric drive unit solely by the ultra-capacitor unit (5) under a lack or delay of power generation of the fuel cell unit, at least for a predetermined time period.

10. The method for distributing of power according to claim 9, further comprising the step of:
discharging the ultra-capacitor unit (5) based on transferring energy to a low voltage battery (6) indirectly connected to the high voltage supply line (3) by a bidirectional DC/DC converter (7).

11. The method for distributing power according to claim 10, wherein
the step of discharging the ultra-capacitor unit (5) is triggered in relation to a shut-down of the fuel cell vehicle.

12. The method for distributing power according to claim 10 or 11, wherein
the step of discharging draws energy from the ultra-capacitor unit (5) so as to reach at least a predetermined low voltage level of an output voltage of the ultra-capacitor unit (5) and/or the supply voltage of the high voltage supply line (3).

13. The method for distributing power according to any of claims 9 to 12, further comprising the step of:
charging the ultra-capacitor unit (5) based on transferring energy from the low voltage battery (6) indirectly connected to the high voltage supply line (3) by the bidirectional DC/DC converter (7).

14. The method for distributing power according to claim 13, wherein
the step of charging the ultra-capacitor unit (5) is triggered in relation to a start-up of the fuel cell vehicle.

15. The method for distributing power according to claim 13 or 14, wherein
the step of charging delivers energy to the ultra-capacitor unit (5) so as to reach at least a predetermined high voltage level of the output voltage of the ultra-capacitor unit (5) and/or the supply voltage of the high voltage supply line (3).
